# EUROPÄISCHE PATENTANMELDUNG

(11) **EP 0 935 091 A1**
(43) Veröffentlichungstag der Anmeldung: **11.08.1999**
(21) Anmeldenummer: 99102122.1
(22) Anmeldetag: 03.02.1999
(51) Int. Cl.: F21V 8/00

(54) **Stabförmiger Lichtleiter**

(30) Priorität: 05.02.1998 DE 19804440
(71) Anmelder: Hella KG Hueck & Co., 59552 Lippstadt (DE)
(72) Erfinder: Giepen, Bernd, 59597 Erwitte (DE); Ruths, Torsten Dr., 59557 Lippstadt (DE)

(57) **Zusammenfassung**

Stabförmiger Lichtleiter (1) für eine Beleuchtungseinrichtung für Kraftfahrzeuge mit mindestens einer Stirnfläche (7) als Lichteinkoppelfläche und einer in Richtung einer Längsachse (3) angeordneten quer zur Längsachse (3) abstrahlenden Lichtaustrittsfläche (8), der gegenüberliegend eine reflektierende Fläche (9) angeordnet ist, die quer zur Längsachse (3) eine Vielzahl lichtablenkender Prismen (10) aufweist, wobei die Prismen (10) quer zur Längsachse (3) eine Breite (12) aufweisen, die in Richtung der Längsachse (3) variiert, so daß zur Lichteinkoppelfläche (8) hin angeordnete Prismen (10) eine geringere Breite aufweisen, als von der Lichteinkoppelfläche (7) entfernt angeordnete Prismen (10).

## Beschreibung

Die Erfindung betrifft einen stabförmigen Lichtleiter für eine Beleuchtungseinrichtung für Kraftfahrzeuge mit mindestens einer Stirnfläche als Lichteinkoppelfläche und einer in Richtung einer Längsachse angeordneten quer zur Längsachse abstrahlenden Lichtaustrittsfläche, der gegenüberliegend eine reflektierende Fläche angeordnet ist, die quer zur Längsachse eine Vielzahl lichtablenkender Prismen aufweist.

Stabförmige Lichtleiter werden in Kraftfahrzeugen beispielsweise zur Beleuchtung von Anzeigeeinrichtungen oder eines Innenraumes verwendet.

Aus der DE 41 17 278 C2 ist ein stabförmiger Lichtleiter bekannt, der eine quer zu seiner Längsrichtung abstrahlende Lichtaustrittsfläche aufweist, der gegenüberliegend eine reflektierende Fläche angeordnet ist. Die reflektierende Fläche weist eine Vielzahl von Prismen auf, die quer zur Längsachse des stabförmigen Lichtleiters angeordnet sind. Über eine der Stirnflächen des Lichtleiters wird Licht eingekoppelt.

Nachteilig bei diesem Lichtleiter ist, daß er über seine Länge nicht gleichmäßig ausleuchtet.

Aus der G 87 12 678.8 ist ein stabförmiger Lichtleiter zur Ausleuchtung von unterschiedlichen Leuchtfeldern bekannt, der zur Erzielung einer gleichmäßigen Ausleuchtung Prismenfelder mit unterschiedlichen Prismenabständen aufweist.

Nachteilig dabei ist, daß die Ausleuchtung innerhalb der einzelnen Prismenfelder mit ihren gleichen Abständen nicht homogen ist und die Herstellung der einzelnen Prismen bzw. ihres Formwerkzeuges relativ aufwendig ist. Insbesondere für lange Prismenstäbe mit bis zu 1000 mm Länge machen sich diese Nachteile bemerkbar.

Aufgabe der vorliegenden Erfindung ist es daher, die bekannten stabförmigen Lichtleiter so zu verbessern, daß sie auch bei relativ großer Länge eine möglichst homogene Ausleuchtung erzielen.

Die Aufgabe wird erfindungsgemäß dadurch gelöst, daß die Prismen quer zur Längsachse eine Breite aufweisen, die in Richtung der Längsachse variiert, so daß zur Lichteinkoppelfläche hin angeordnete Prismen eine geringere Breite aufweisen, als von der Lichteinkoppelfläche entfernt angeordnete Prismen.

Dadurch, daß die einzelnen Prismen über die Länge des stabförmigen Lichtleiters gleiche Abstände zueinander haben können und lediglich die Breite quer zur Längsachse variiert wird, ist der stabförmige Lichtleiter und seine Form einfacher herzustellen. Gleichzeitig kann eine homogenere Ausleuchtung über die Länge des Lichtleiters erzielt werden.

Dabei kann die Breite der Prismen linear, exponentiell oder durch eine beliebige Funktion der Länge gestaltet werden.

Da der nutzbare Lichtstrom über die Länge des Prismenstabes abnimmt, wird über die kleinere Prismenbreite an dem Einkoppelende bzw. an den Einkoppelenden ebensoviel Licht ausgekoppelt und dadurch zur Beleuchtung genutzt, wie bei den breiteren Prismen am Ende bzw. in der Mitte des stabförmigen Lichtleiters.

Der stabförmige Lichtleiter eignet sich bei einem Durchmesser zwischen 6 bis 10 mm und einer Länge bis zu 1000 mm aufgrund seiner homogenen Ausleuchtung auch zum Einsatz als Langfeldleuchte, als hochgesetzte Bremsleuchte, als Seitenmarkierungsleuchte oder ähnliches.

Der Lichtleiter kann einen im wesentlichen runden Querschnitt aufweisen. Es ist aber auch möglich, den Lichtleiter mit einem eckigen Querschnitt auszubilden.

Nach einer bevorzugten Ausführungsform der Erfindung ist die der Lichteinkoppelfläche gegenüberliegende Stirnseite als zweite Lichteinkoppelfläche ausgebildet. Das auf der halben Länge zwischen den Lichteinkoppelflächen angeordnete Prisma weist dabei die größte Breite auf.

Dadurch ist es möglich, einen größeren Lichtstrom zu erzielen bzw. einen doppelt so langen Lichtleiter mit gleicher Helligkeit homogen auszuleuchten. So kann beispielsweise ein Prismenstab bis zu 1000 mm Länge mit gleichmäßiger Ausleuchtung verwendet werden.

Weitere Einzelheiten der Erfindung ergeben sich aus der nachfolgenden ausführlichen Beschreibung in den beigefügten Zeichnungen, in denen bevorzugte Ausführungsformen der Erfindung beispielsweise veranschaulicht sind.

In den Zeichnungen zeigen:

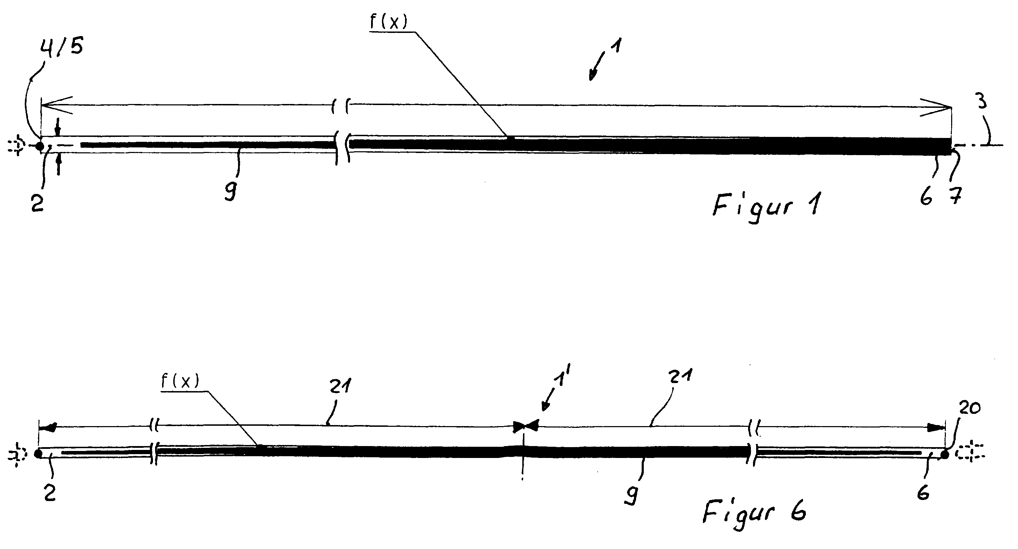

- Figur 1:: Eine Draufsicht auf die reflektierende Fläche eines stabförmigen Lichtleiters in verkleinerter Darstellung,

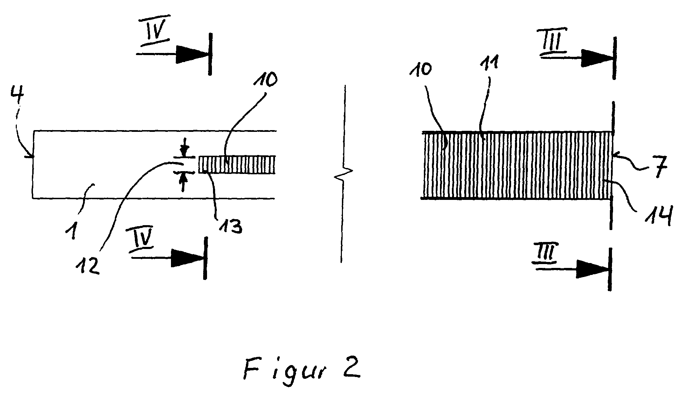

- Figur 2:: eine Draufsicht auf die Enden des stabförmigen Lichtleiters von Figur 1 in vergrößerter Darstellung,

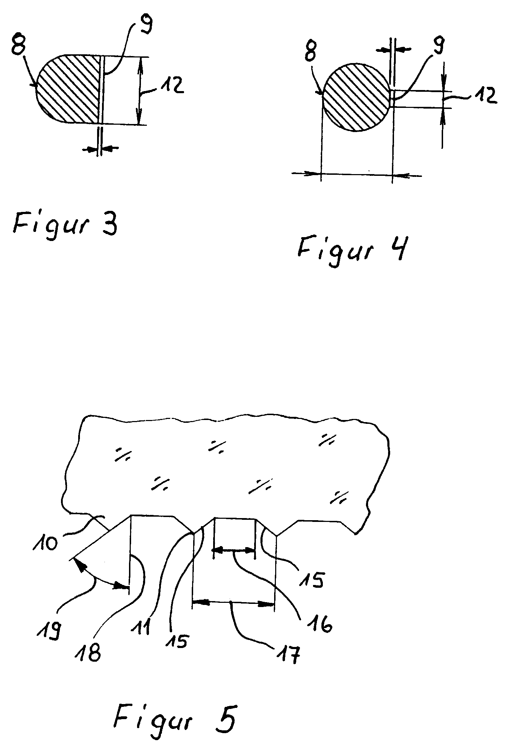

- Figur 3:: einen Querschnitt des stabförmigen Lichtleiters von Figur 2 in vergrößerter Darstellung entlang der Linie III - III geschnitten,
- Figur 4:: einen Querschnitt des stabförmigen Lichtleiters von Figur 2 entlang der Linie IV - IV geschnitten,
- Figur 5:: eine Seitenansicht der Prismen in vergrößerter Darstellung und
- Figur 6:: eine Draufsicht auf die reflektierende Fläche eines stabförmigen Lichtleiters mit einer zweiten Lichteinkoppelfläche in verkleinerter Darstellung.

Der stabförmige Lichtleiter (1) weist an einem ersten Ende (2) eine quer zu seiner Längsachse (3) angeordnete erste Stirnfläche (4) auf, die als Lichteinkoppelfläche (5) ausgebildet ist. An seinem dem ersten Ende (2) gegenüberliegenden zweiten Ende (6) weist der stabförmige Lichtleiter (1) eine zweite Stirnfläche (7) auf, die ebenfalls quer zu der Längsachse (3) angeordnet ist.

Der stabförmige Lichtleiter (1) weist in Längsrichtung eine quer zur seiner Längsachse (3) abstrahlende Lichtaustrittsfläche (8) auf. Auf der der Lichtaustrittsfläche (8) gegenüberliegenden Seite des stabförmigen Lichtleiters (1) ist eine reflektierende Fläche (9) angeordnet. Lichtaustrittsfläche (8) und reflektierende Fläche (9) verlaufen im wesentlichen parallel zur Längsachse (3).

Aufbauend auf dem lichtleitenden Material des Lichtleiters (1) weist die reflektierende Fläche (9) eine Vielzahl lichtablenkender Prismen (10) auf, deren Dachkanten (11) quer zur Längsachse (3) angeordnet sind. Die Breite (12) bzw. die Länge der Dachkanten (11) variiert in Richtung der Längsachse (3). Die zur Lichteinkoppelfläche (5) hin angeordneten Prismen (13) weisen eine geringere Breite (12) auf, als die von der Lichteinkoppelfläche (5) entfernt angeordneten Prismen (14).

Die Breite (12) der Prismen (10) variiert exponentiell, vorzugsweise nach einer e-Funktion. Es ist aber auch möglich, die Breite (12) der Prismen (10) linear oder nach einer beliebig vorgebbaren Funktion zu variieren. Die einander zugewandten Flanken (15) benachbarten Prismen (10) weisen einen Abstand (16) zueinander auf. Die Dachkanten (11) einander benachbarter Prismen (10) weisen einen Dachkantenabstand (17) auf. Gegenüber einer rechtwinklig zur Längsachse (3) angeordneten Normalen (18) weisen die Flanken (15) der Prismen (10) einen Flankenwinkel (19) auf. Der stabförmige Lichtleiter (1) weist einen Querschnitt auf, der mit Ausnahme der reflektierenden Fläche (9) im wesentlichen kreisrund ausgebildet ist. Es ist aber auch möglich, den Querschnitt des Lichtleiters (1) beispielsweise rechteckig auszubilden.

Nach einer weiteren Ausführungsform der Erfindung ist die zweite Stirnfläche (7) eines Lichtleiters (1') als zweite Lichteinkoppelfläche (20) ausgebildet. Das auf der halben Länge (21) zwischen den Lichteinkoppelflächen (5, 20) angeordnete Prisma (22) weist hier die größte Breite (12') auf.

Die Prismenoptik bzw. die reflektierende Fläche (9) mit ihren Prismen (10) kann je nach Ausführungsform bedampft, teilbedampft oder unbedampft sein.

Der Lichtleiter (1) kann beispielsweise einen Durchmesser (23) von 8 mm aufweisen. Quer zu den Dachkanten (11) kann der Lichtleiter (1) bei einer vorgegebenen Prismenhöhe (24) eine Gesamthöhe (25) von 8,4 mm aufweisen. Das der Lichteinkoppelfläche (5) benachbarte Prisma (13) kann dabei eine Breite (12) von beispielsweise 2 mm und das der Lichteinkoppelfläche (5) entfernt liegende Prisma (14, 22) kann beispielsweise eine maximale Breite (12) von 8 mm aufweisen, die dem Durchmesser (23) entspricht, so daß der Querschnitt des Lichtleiters (1, 1') an dieser Stelle etwa U-förmig ausgebildet ist. Der Dachkantenabstand (17) einander benachbarte Prismen kann beispielsweise 2 mm und der Flankenwinkel (19) 52° betragen. Der Lichtleiter (1) kann beispielsweise eine Gesamtlänge (26) von 500 mm und der Lichtleiter (1') eine Gesamtlänge (26') von 1.000 mm aufweisen.

An den Lichteinkoppelflächen (5, 20) wird beispielsweise Licht von Leuchtdioden (LED's) (27) oder von nicht dargestellten Lichtwellenleitern eingekoppelt und durch Totalreflexion weitergeleitet. Auf die Prismen (10) auftreffendes Licht wird reflektiert und tritt auf der den Prismen (10) gegenüberliegenden Lichtauftrittsfläche (8) aus. Durch ihre unterschiedliche Breite (12) weisen die Prismen (10) unterschiedlich große Reflexionsflächen, mit einer entsprechend unterschiedlichen reflektierenden Lichtmenge auf.

## Patentansprüche

1. Stabförmiger Lichtleiter für eine Beleuchtungseinrichtung für Kraftfahrzeuge mit mindestens einer Stirnfläche als Lichteinkoppelfläche und einer in Richtung einer Längsachse angeordneten quer zur Längsachse abstrahlenden Lichtaustrittsfläche, der gegenüberliegend eine reflektierende Fläche angeordnet ist, die quer zur Längsachse eine Vielzahl lichtablenkender Prismen aufweist, dadurch gekennzeichnet, daß die Prismen (10, 13, 14, 22) quer zur Längsachse (3) eine Breite (12) aufweisen, die in Richtung der Längsachse (3) variiert, so daß zur Lichteinkoppelfläche (5, 20) hin angeordnete Prismen (13) eine geringere Breite (12) aufweisen, als von der Lichteinkoppelfläche (5, 20) entfernt angeordnete Prismen (14, 22)

2. Stabförmiger Lichtleiter nach Anspruch 1, dadurch gekennzeichnet, daß die Breite (12) der Prismen (10, 13, 14, 22) nach einer beliebig vorgebbaren Funktion variiert.

3. Stabförmiger Lichtleiter nach Anspruch 1 oder 2, dadurch gekennzeichnet, daß die Breite (12) der Prismen (10, 13, 14, 22) linear variiert.

4. Stabförmiger Lichtleiter nach Anspruch 1 oder 2, dadurch gekennzeichnet, daß die Breite (12) der Prismen (10, 13, 14, 22) exponentiell variiert.

5. Stabförmiger Lichtleiter nach einem der Ansprüche 1 bis 4, dadurch gekennzeichnet, daß die Flanken (15) benachbarter Prismen (10) einen Abstand (16) zueinander aufweisen.

6. Stabförmiger Lichtleiter nach einem der Ansprüche 1 bis 5, dadurch gekennzeichnet, daß die der Lichteinkoppelfläche (5) gegenüberliegende zweite Stirnfläche als zweite Lichteinkoppelfläche (20) ausgebildet ist.

7. Stabförmiger Lichtleiter nach Anspruch 6, dadurch gekennzeichnet, daß das auf der halben Länge (21) zwischen den Lichteinkoppelflächen (5, 20) angeordnete Prisma(22) die größte Breite (12) aufweist.

8. Stabförmiger Lichtleiter nach einem der Ansprüche 1 bis 7, dadurch gekennzeichnet, daß der Querschnitt des Lichtleiters (1, 1') mit Ausnahme der reflektierenden Fläche (9) im wesentlichen kreisrund ist.

9. Stabförmiger Lichtleiter nach einem der Ansprüche 1 bis 8, dadurch gekennzeichnet, daß die Lichteinkoppelung über Lumineszenzdioden (27) erfolgt.

10. Stabförmiger Lichtleiter nach einem der Ansprüche 1 bis 8, dadurch gekennzeichnet, daß die Lichteinkoppelung über Lichtwellenleiter erfolgt.
